# EUROPEAN PATENT APPLICATION

(11) **EP 1 473 283 A2**
(43) Date of publication of application: **03.11.2004**
(21) Application number: 04101802.9
(22) Date of filing: 28.04.2004
(51) Int. Cl.: C03B 33/04, C03B 33/027

(54) **Glass sheet cutting method**

(30) Priority: 29.04.2003 IT TO20030322
(71) Applicant: BOTTERO S.p.A., 12010 Cuneo (IT)
(72) Inventor: Ghinamo, Paolo, 12012 Boves (IT)
(74) Representative: Jorio, Paolo, Dr. Ing.

(57) **Abstract**

In a sheet (2) of glass resting on a supporting surface (8), a given cut line (3) is made by a wheel (15) free to rotate about an axis (14) perpendicular to the supporting surface (8) by determining a cut start point (P) on the cut line (3), determining the tangent (18) to the cut line (3) at the cut start point (P), and orienting the wheel (15) by rotating it about the perpendicular axis (14) so that the projection (19) of its peripheral edge (16) on the supporting surface (8) is positioned parallel to the tangent (18) prior to moving the wheel (15) up to the cut start point (P).

## Description

The present invention relates to a glass sheet cutting method.

Glass sheets are known to be cut using cutting heads, the cutting wheel of which rotates about a horizontal axis and is controlled both on the sheet supporting surface, i.e. is moved in two perpendicular directions, and rotationally about a vertical third axis perpendicular to the sheet supporting surface. Cutting heads with three controlled axes of the above type are mostly used on top-range cutting machines or tables for complex precision work, but rarely on bottom-range machines or tables, on account of the relatively high cost of the heads.

Bottom-range machines or tables normally feature cutting heads with two controlled axes, i.e. in which the wheel is controlled on the sheet supporting surface, but allowed to rotate freely about the vertical axis.

Freedom to rotate about the vertical axis simplifies control systems but fails to provide for top-quality cut items. This is mainly due to the fact that, as of the start point of the cutting path, the wheel "shimmies" along a first portion of the path, i.e. oscillates about the vertical axis, so that, when severed, the cut item has a jagged, i.e. serrated, undulated and often chipped, edge. Serrations and/or undulations can only be removed at relatively high cost, and constitute uncontrollable break initiators.

It is an object of the present invention to provide a cutting method designed to provide a straightforward, low-cost solution to the above problems.

According to the present invention, there is provided a method of cutting a sheet of glass; the method comprising the steps of placing the sheet of glass on a supporting surface; determining a peripheral cut line laterally defining the flat item to be obtained; and moving along the peripheral cut line a work head comprising a cutting wheel having a peripheral cutting edge and free to rotate about an axis perpendicular to said supporting surface; the method being characterized by comprising the steps of determining a cut start point on said peripheral cut line; determining the tangent to said peripheral cut line at said cut start point; and orienting said cutting wheel by rotating the cutting wheel about said axis, so that the projection of said peripheral cutting edge on said supporting surface is positioned parallel to said tangent prior to moving the cutting wheel up to said cut start point and commencing the cut.

In the method described above, said cutting wheel is preferably oriented by moving said cutting head on said supporting surface in a direction parallel to said tangent, while keeping said cutting wheel in contact with a flat reference surface. When moving said cutting head, the cutting wheel conveniently rotates in contact with said flat reference surface without cutting the flat reference surface.

In an alternative operating mode, when moving said cutting head, the cutting wheel cuts an orientation cut line on said flat reference surface.

The invention will now be described with reference to the accompanying drawings, in which:
Figure 1 shows, schematically, a cutting unit implementing the method according to the teachings of the present invention;
Figure 2 shows a plan view, with parts removed for clarity, of the Figure 1 cutting unit.

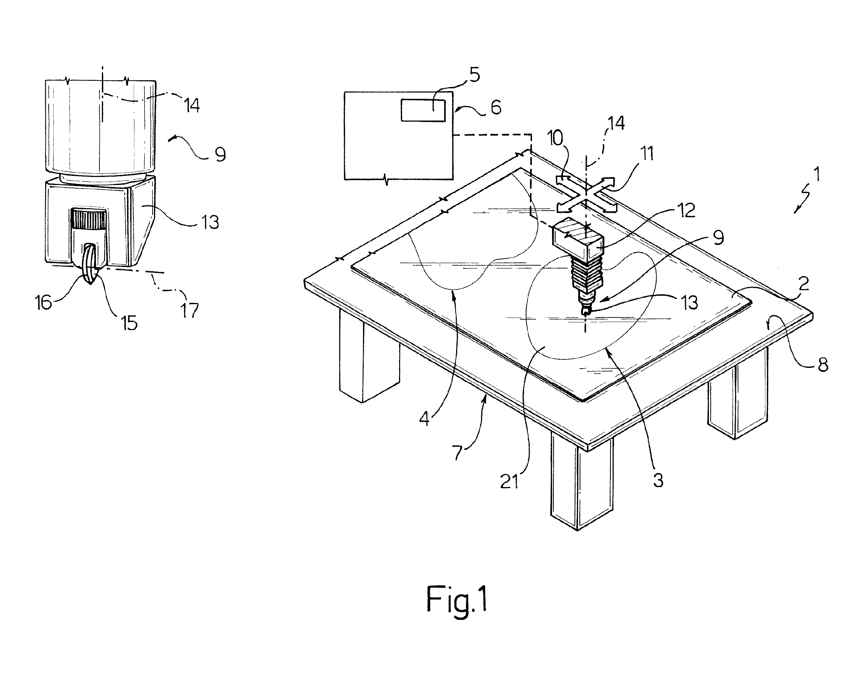

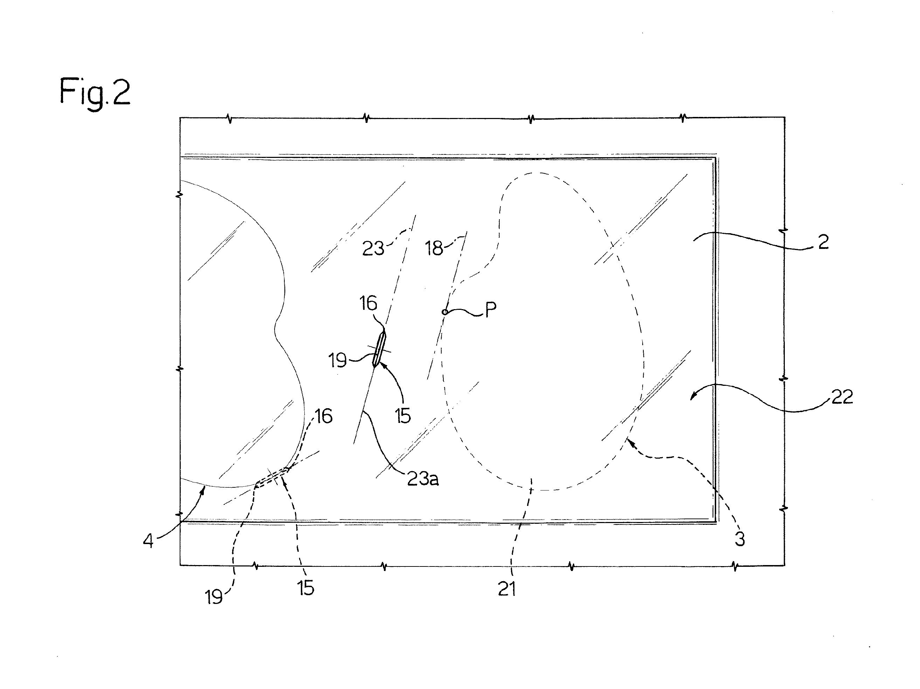

Number 1 in Figure 1 indicates as a whole a unit for making, in a sheet 2 of glass, a number of cut lines - two in the example shown - indicated 3 and 4 in Figure 2 and memorized in a memory block 5 of a known control device 6 (shown schematically) of unit 1.

With reference to Figure 1, unit 1 also comprises a frame 7 defining a supporting surface 8 for the work sheet 2; and a cutting head 9 fitted to frame 7 in known manner not described in detail, and movable, under the control of control device 6, in two perpendicular directions 10 and 11 parallel to supporting surface 8.

Cutting head 9 comprises a connecting portion 12; and a supporting member 13, which is free to rotate with respect to connecting portion 12 about a vertical axis 14 perpendicular to surface 8, and is fitted with a cutting wheel 15 having a peripheral cutting edge 16 and fitted to supporting member 13 to rotate freely about an axis 17 perpendicular to axis 14.

Sheet 2 is cut as follows. Firstly, sheet 2 is placed on and clamped to supporting surface 8 in known manner; the line to be cut, e.g. line 3, is selected from memory block 5; and a start point, e.g. point P, is determined along the selected line. Device 6 then determines in known manner and memorizes the tangent 18 to line 3 at point P (Figure 2); wheel 15 is then oriented by rotating it about vertical axis 14 so that the perpendicular projection 19 of the cutting edge 16 of the wheel on supporting surface 8 is positioned parallel to the determined tangent 18; and cutting wheel 15 is then brought up to point P and moved in known manner to cut line 3 laterally defining the item to be produced and indicated 21 in Figure 2.

Cutting wheel 15 is conveniently oriented by bringing it into and keeping it in contact with a flat reference surface, conveniently the major top surface 22 of work sheet 2, and by moving cutting head 9 parallel to supporting surface 8 in a direction 23 parallel to tangent 18 by a quantity varying according to the type of wheel used, and normally ranging between 1 and 20 millimetres. As head 9 is moved, wheel 15 rotates "into line" about vertical axis 14, i.e. into a stable condition corresponding to a stable condition at point P. By appropriately regulating the thrust of the wheel on the sheet, the wheel can be maintained simply contacting the surface of sheet 2 without cutting the sheet, or can make an orientation cut 23a in sheet 2 (Figure 2). In the latter case, wheel 15 is oriented by forcing it into contact with a portion of work sheet 2 outside both lines 3, 4 to be cut, so that, when the sheet is severed, the portion of the sheet cut orienting the wheel defines a waste portion. To sever the sheet along a relatively complex cut line, so-called auxiliary cut lines are used, which extend from the cut line defining the finished item towards the outer peripheral edge of the sheet to form "auxiliary severing cuts". In which case, the orientation cut may form part of an auxiliary cut line to reduce work time and the problems posed by the presence of orientation cuts.

The cutting method described therefore provides for obtaining top-quality finished items, even using cutting heads with two controlled axes. In fact, operating as described, cutting wheel 15 is already positioned correctly on reaching cut start point P, thus eliminating any settling oscillation or "shimmying" of the cutting wheel about vertical axis 14, so that the severed item has an even edge, i.e. with so serrations, undulations or chipping.

Clearly, changes may be made to the method as described herein without, however, departing from the scope of the present invention. In particular, the cutting wheel may be oriented by moving it on a reference surface other than the work sheet, e.g. a reference sheet located in a specific area of the supporting surface.

## Claims

1. A method of cutting a sheet (2) of glass; the method comprising the steps of placing the sheet (2) of glass on a supporting surface (8); determining a peripheral cut line (3; 4) laterally defining the flat item (21) to be obtained; and moving along the peripheral cut line (3) a work head (9) comprising a cutting wheel (15) having a peripheral cutting edge (16) and free to rotate about an axis (14) perpendicular to said supporting surface (8); the method being **characterized by** comprising the steps of determining a cut start point (P) on said peripheral cut line (3); determining the tangent (18) to said peripheral cut line (3) at said cut start point (P); and orienting said cutting wheel (15) by rotating the cutting wheel (15) about said axis (14), so that the projection (19) of said peripheral cutting edge (16) on said supporting surface (8) is positioned parallel to said tangent (18) prior to moving the cutting wheel (15) up to said cut start point (P) and commencing the cut.

2. A method as claimed in Claim 1, **characterized in that** said cutting wheel is oriented by moving said cutting head (9) on said supporting surface (8) in a direction parallel to said tangent, while keeping said cutting wheel (15) in contact with a flat reference surface (22).

3. A method as claimed in Claim 2, **characterized in that**, when moving said cutting head (9), the cutting wheel (15) rotates in contact with said flat reference surface (22) without cutting the flat reference surface (22) .

4. A method as claimed in Claim 2, **characterized in that**, when moving said cutting head (9), the cutting wheel (15) cuts an orientation cut line (23a) on said flat reference surface (22).

5. A method as claimed in any one of Claims 2 to 4, **characterized in that** said flat reference surface (22) is a major surface of a sheet of glass.

6. A method as claimed in Claim 5, **characterized in that** said flat reference surface (22) is the surface of a portion of said sheet (2) to be cut, which portion lies outside said peripheral cut line and defines a waste portion when the flat item is severed.
